# FASCICULE DE BREVET EUROPEEN

(11) **EP 1 960 317 B1**
(45) Date de publication et mention de la délivrance du brevet: **31.01.2018**
(21) Numéro de dépôt: 06830103.5
(22) Date de dépôt: 23.11.2006
(51) Int. Cl.: C03C 17/00, C03C 17/25, B32B 17/10, E06B 5/16, C09K 21/02

(54) **VITRAGE ANTI-FEU**
FLAMMWIDRIGE VERGLASUNG
FIRE-RESISTANT GLAZING

(30) Priorité: 25.11.2005 EP 05111299
(43) Date de publication de la demande: 27.08.2008
(73) Titulaire: AGC Glass Europe, 1348 Louvain-la-Neuve (BE)
(72) Inventeur: GOELFF, Pierre, B-6040 Jumet (BE)
(74) Mandataire: Le Vaguerèse, Sylvain Jacques
(86) Numéro de dépôt international: PCT/EP2006/068839
(87) Numéro de publication internationale: WO 2007/060203

(56) Documents cités:
- WO-A-02/100636
- WO-A-03/064801
- DE-A1- 2 833 385
- US-A- 3 492 137
- US-A- 5 565 273
- DATABASE WPI Week 198334, Derwent Publications Ltd., London, GB; AN 1983-744528 -& JP S58 120 548 A (ASAHI GLASS CO LTD) 18 Juillet 1983

## Description

La présente invention concerne un procédé de préparation des vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées.

L'utilisation des silicates alcalins hydratés dans la fabrication des vitrages anti-feu s'effectue selon deux modes distincts.

Le premier mode comprend les produits dans lesquels la ou les couches de silicates sont formées à partir de solutions commerciales de ces silicates, solutions auxquelles sont ajoutés des additifs divers qui en améliorent les propriétés et/ou les conditions de mise en oeuvre. Partant de ces solutions les couches sont obtenues en répandant la solution sur un support et en procédant à un séchage plus ou moins prolongé jusqu'à obtention d'une couche solide. La couche de silicate ainsi formée, éventuellement directement sur une feuille de verre, est ensuite incluse dans un ensemble feuilleté entre deux feuilles de verre, dans une opération d'étuvage.

Pour cette première famille de produits les conditions de préparation, et particulièrement celles de séchage sont relativement contraignantes.

La teneur en eau des solutions commerciales de silicates de sodium est fonction du rapport molaire Si/Na dont dépend le caractère plus ou moins "réfractaire" des produits formés. Elle est de l'ordre de 65% en poids pour un rapport molaire de 3,3, et de l'ordre de 45% pour un rapport molaire de 2. Ces solutions industrielles sont ajustées pour maintenir une viscosité adéquate pour leurs utilisateurs. Aux valeurs indiquées ci-dessus, la viscosité se situe à environ 100mPa.s.

Pour des rapports molaires de l'ordre de 3,3 les produits séchés à base de silicate de sodium doivent présenter une teneur en eau limitée d'environ 20 à 25%. Pour des teneurs en eau plus élevées ces produits sont généralement moins stables au vieillissement. Dans le temps il est difficile de garantir qu'ils restent parfaitement transparents. Il se forme souvent un voile qui va en s'accentuant au fil du temps. Il convient de souligner que l'apparition de ce voile est d'autant plus fréquente que la teneur en eau est plus importante. C'est la raison pour laquelle cette teneur est systématiquement maintenue relativement faible, autrement dit que le séchage doit être plus poussé.

Le séchage traditionnellement se fait dans des étuves dans lesquelles température, hygrométrie et ventilation doivent être précisément contrôlées, en suivant des cycles dont la durée est d'autant plus longue que la teneur initiale en eau est plus importante. Cette durée se compte en dizaines d'heures.

Le choix de cette voie du séchage à partir de silicates alcalins industriels a également des conséquences pour ce qui concerne les qualités mécaniques des vitrages incorporant ces couches de silicates. La très faible teneur en eau ne permet pas d'avoir des couches très "plastiques". La conséquence est une limitation de la résistance dite "au choc mou", résistance qui est nécessaire dans certaines applications notamment dans les vitrages extérieurs, et qui doit être compensée par une structure particulière, par exemple par association avec des feuilles stratifiées comportant un intercalaire d'un matériau thermoplastique.

Un deuxième mode concerne les produits dans lesquels une solution de silicate dont la teneur en eau est initialement relativement "faible", par exemple de l'ordre de 45 à 60%, est modifiée par l'addition de produits qualifiés de "durcisseurs", "d'agents de réticulation" ou d'autre façon encore. Ces qualificatifs désignent de façon générique des produits qui favorisent la gélification de la solution de silicate. Ils sont choisis soigneusement, de sorte qu'après leur addition à la solution de silicate, cette dernière laissée au repos durcit spontanément dans un temps relativement bref, sans qu'il soit nécessaire de procéder à un séchage.

Pour ces produits, avant formation du gel la solution avec ses additifs est coulée entre deux feuilles de verre délimitant un espace clos. Un joint situé à la périphérie des feuilles de verre les associe de façon étanche et maintient la solution pendant sa gélification.

L'absence de séchage constitue un avantage certain pour ce qui concerne le mode de production. Les produits en question conservent bien évidemment une teneur en eau relativement élevée. Il n'est en effet pas possible de réduire la teneur initiale de la solution de silicate sans provoquer une gélification prématurée, rendant impossible la mise en oeuvre ultérieure.

Dans certaines conditions, la présence de cette eau relativement abondante peut être moins favorable à la tenue au feu de ces produits. Une proportion d'eau élevée peut conduire à un manque de cohésion du vitrage ou à la formation d'une "mousse" très irrégulière nuisible à l'intégrité de la feuille soumise à l'épreuve du feu. Pour que ces produits présentent les qualités "mécaniques" requises à l'épreuve au feu, il est fait usage de moyens qui substituent leurs propriétés à celles de la couche intumescente. Par exemple à la place d'une simple feuille de verre recuit, il est fait usage de verre trempé ou mieux de vitrages feuilletés comportant une feuille intercalaire thermoplastique. Ces solutions accroissent le coût des produits.

Des propositions ont été faites qui d'une certaine façon tentent d'améliorer les techniques utilisant la gélification. Ainsi la publication WO 02/100636 enseigne l'usage de solutions suffisamment riches en eau (plus de 60%) pour que le produit puisse être facilement coulé entre les parois de verre. Une fois le produit entre les feuilles il est soumis à une irradiation électromagnétique à fréquence très élevée conduisant à sa gélification. Préalablement à l'introduction entre les feuilles de verre, la solution est dégazée par un traitement aux ultrasons. La mise en oeuvre de cette technique montre une complexité certaine qui la rend peu attractive.

Qu'il s'agisse des techniques de formation par séchage ou de celles comprenant une gélification, de nombreuses améliorations ont été proposées. Ces propositions aménagent de façon plus ou moins significative les compromis entre la commodité et la rapidité de fabrication d'une part, et les propriétés des produits résultants d'autre part. Ces améliorations portent aussi bien sur les techniques de fabrication que sur les compositions mises en oeuvre.

Au chapitre des techniques, on peut citer l'utilisation d'atmosphère contrôlée au cours du séchage pour éviter notamment la formation de bulles dans le produit au cours de son vieillissement. Dans ce sens l'utilisation d'oxygène à la place de l'air dans les enceintes de séchage est avantageuse. Toujours à propos des techniques, il a été proposé de remplacer le séchage « statique » effectué dans des enceintes dans lesquelles sont entreposées des feuilles de verre revêtues d'une couche de composition de silicate à sécher, par un système « dynamique » dans lequel la composition à sécher est déposée sous forme d'un film sur un convoyeur support, lequel progresse de façon continue dans un four de séchage de type tunnel. Le temps alloué au séchage dans ces conditions est nécessairement plus court que celui du séchage dans des enceintes, et, compte tenu de ce que le temps de séchage croît plus vite que l'épaisseur de la couche, pour une teneur en eau finale déterminée, les couches obtenues dans ces conditions ne peuvent avoir qu'une épaisseur très limitée par rapport à celles obtenues en séchage statique.

Les compositions font aussi l'objet de multiples propositions d'amélioration ou d'ajustement aux exigences particulières des produits concernés.

De façon générale les publications antérieures, qu'il s'agisse de produits séchés ou non, proposent l'utilisation de silicates de sodium, potassium ou lithium ou encore de leurs mélanges. Le plus fréquemment néanmoins, c'est le silicate de sodium qui est utilisé. L'utilisation de silicate de potassium a été proposée principalement pour améliorer la tenue au vieillissement des couches soumises au rayonnement U.V. , et dans la formation des gels pour la résistance au choc mou.

Pour obtenir des produits offrant des tenues au feu particulièrement élevées, il a été proposé d'accroître le caractère réfractaire des couches, autrement dit principalement en augmentant le rapport Si/alcalin. Cet accroissement du caractère réfractaire n'est pas nécessairement favorable aux propriétés optiques des vitrages constitués. Il est obtenu par exemple par introduction de silice finement divisée dans la composition initiale.

Traditionnellement aussi, l'adjonction de glycérine ou d'un polyol dans la composition est utilisée pour améliorer les caractéristiques mécaniques des couches intumescentes en leur conférant une certaine plasticité. En contrepartie, la présence de glycérine intervient de manière négative sur la vitesse de séchage des couches.

D'autres types d'additifs ont encore été proposés, et parmi ceux-ci divers agents tensioactifs qui favorisent le mouillage des substrats avec lesquels la solution de silicate alcalin est en contact.

Les propositions antérieures résultent de compromis variés entre les exigences de toutes sortes qui s'appliquent à ce type de produits. Des solutions alternatives sont cependant nécessaires pour les raisons indiquées précédemment pour améliorer les conditions de production et/ou les caractéristiques des produits.

Les inventeurs ont cherché une voie de production aboutissant notamment à des produits dont la teneur en eau soit suffisante pour conférer les qualités mécaniques nécessaires, notamment celle de résistance au "choc mou" sans pour autant nuire aux propriétés de tenue au feu.

Simultanément les inventeurs ont eu pour objectif de proposer un procédé de production des couches intumescentes qui soit moins contraignant que ceux mettant en oeuvre les techniques de séchage rappelées ci-dessus.

Une étude approfondie des conditions de formation des couches intumescentes à la fois par séchage et par formation de gels a permis de mettre en évidence les résultats qui font l'objet de l'invention et qui répondent pour une large part aux objectifs visés.

Il a été montré et de façon très inattendue, qu'en suivant le procédé de préparation selon la revendication 1, des compositions de silicates alcalins présentant un caractère réfractaire prononcé, à savoir dont le rapport molaire SiO₂/M₂O, est compris entre 3,5 et 7, et de préférence entre 4 et 6, et dont la teneur en eau s'établit entre 33 et 43% et de préférence entre 35 et 42% et de manière particulièrement préférée entre 36 et 41%, satisfont très largement aux objectifs indiqués précédemment.

Les pourcentages indiqués sont en poids, et sont exprimés pour des compositions. En présence d'additifs modifiant les compositions ceux-ci viennent en déduction de la teneur en eau. C'est particulièrement le cas des produits organiques introduits tels que la glycérine ou les agents tensioactifs.

Il faut souligner que les produits antérieurs obtenus par séchage de solutions industrielles de silicates qui présenteraient ces compositions ne conviennent pas. En principe il devrait être possible de limiter le séchage pour atteindre les compositions présentant ces teneurs en eau relativement élevées. Cependant, à l'expérience, les produits obtenus dans ces conditions ne sont pas transparents. Le "haze" est si conséquent que les produits ne sont au mieux que translucides. De la même façon, pour les produits faisant l'objet d'une gélification, des teneurs en eau aussi faibles ne peuvent être mis en oeuvre. Pour des compositions de ce type, la formation du gel est instantanée.

Les inventeurs ont montré qu'il était possible de résoudre ces difficultés en procédant à la formation de la composition finale en deux temps. Dans un premier temps il s'agit de produire une solution dont le rapport molaire SiO₂/M₂O se situe dans les limites indiquées précédemment, et dont la teneur en eau est aussi limitée que le permet l'absence de gélification dans les conditions, notamment de température ambiante.

La solution à ce stade comprend une teneur en eau qui n'est pas inférieure à 45% (compte non tenu des éventuels additifs) et est aussi basse que possible pour conserver le bénéfice d'une étape ultérieure de séchage extrêmement réduite. La teneur en eau minimale est aussi fonction d'autres caractéristiques, et en particulier de la nature des alcalins présents et du rapport molaire SiO₂/M₂O.

Les solutions industrielles de silicates alcalins disponibles peuvent présenter une teneur en eau d'autant plus faible que le rapport molaire est lui-même plus faible. Ainsi pour les silicates de sodium hydratés industriels, la teneur en eau est de l'ordre de 65% pour un rapport molaire de 3,3, de 45% pour un rapport qui n'est que 2. Nous avons cependant dû spécialement préparer des solutions qui ne sont pas disponibles industriellement pour lesquelles la teneur en eau peut être aussi faible que 40% pour un rapport molaire de 1,5. La préparation de solutions à faible rapport molaire permet donc de limiter la teneur en eau initiale. Mais pour toutes ces solutions le rapport molaire est très insuffisant pour conduire à des produits utiles. Dans tous les cas il convient d'accroître le rapport molaire pour l'amener aux valeurs requises. A cet effet, selon l'invention, il est nécessaire d'ajouter à la solution de silicate une quantité convenable d'un composé à base de silice susceptible de réagir avec la solution de silicate initiale.

Les composés utilisés pour accroître la teneur en silice du mélange sont du type silice colloïdale. Selon l'invention, pour obtenir une incorporation qui conduise à un mélange homogène, la silice colloïdale est ajoutée sous forme d'une suspension aqueuse. Les suspensions de ce type disponibles dans le commerce peuvent être relativement riches en silice. Les teneurs les plus élevées sont de l'ordre de 45 à 50%. Pour ne pas accroître la teneur en eau des mélanges, il est bien entendu préférable d'utiliser les solutions contenant les taux de silice les plus élevés disponibles.

Les proportions relatives de solution de silicate, d'une part et de silice colloïdale d'autre part, sont l'objet d'un nécessaire compromis. Il s'agit tout en accroissant le rapport molaire du mélange dans le même temps d'aboutir à une solution aussi riche en matière sèche que possible. S'il paraît préférable de partir d'une solution de silicate à faible teneur en eau, comme indiqué ci-dessus, cela conduit à un rapport molaire relativement bas et par suite à la nécessité d'ajouter une quantité importante de silice colloïdale et inversement, mais la silice en suspension introduisant une quantité d'eau qui n'est pas inférieure à environ 50% de la masse ajoutée, on voit que l'optimisation ne permet pas de très importantes variations pour conserver les produits mélangés dans une teneur en eau aussi faible que l'on souhaite.

Pour ces mélanges si, comme indiqué, la teneur en eau n'est pas inférieure à environ 45%, on s'efforce de préférence de ne pas dépasser 55% et mieux pas plus de 50%.

Une telle teneur est obtenue par exemple en partant d'une solution de silicate, qui a été spécialement préparée, de rapport molaire 1,5 dont la teneur en eau ne dépasse pas 40%, et en une suspension de silice colloïdale à 50% de silice, jusqu'à obtention d'un rapport molaire par exemple de 5, et une teneur en eau qui découle de ces choix qui s'établit à environ 46%.

Pour préparer les solutions en question il est aussi possible de partir de suspension de silice colloïdale et d'hydroxyde alcalin. Ce dernier est soit sous forme de solution soit au moins en partie sous forme de pastilles solides pour limiter le plus possible la teneur en eau du mélange. Les concentrations des solutions d'hydroxyde peuvent être relativement élevées. La teneur en oxydes métalliques atteint 42% en solution dès 20°C et au moins 85% en pastilles.

La reproductibilité des compositions, et la régularité des propriétés des produits obtenus sont d'autant mieux assurées que la préparation des compositions comprend l'usage de produits chimiques individualisés. Les silicates industriels commercialisés offrent une certaine irrégularité dans leur comportement pour les mêmes qualités supposées. Néanmoins pour des raisons d'économie, il est utile de conserver la mise en oeuvre au moins partielle de silicates alcalins industriels pour la production de ces compositions.

Dans cet état la solution préparée est suffisamment stable aux conditions de température ambiante ordinaires. Elle peut être stockée pendant plusieurs heures, voire plusieurs jours au besoin en la refroidissant, sans risque de formation d'un gel. Il est possible de mettre à profit cette stabilité pour éliminer les bulles qui peuvent être apparues dans le brassage du mélange. L'élimination peut intervenir en laissant simplement la solution au repos ou par toute technique connue telle que l'utilisation d'ultrasons ou le dégazage sous vide par exemple.

Les solutions ainsi obtenues, qui présentent une teneur en eau encore supérieure à 45%, sont ensuite soumises à un séchage limité pour les amener à la concentration de 35 à 43% d'eau selon l'invention.

L'élimination d'une partie de l'eau s'effectue alors sur une composition dont la surface d'échange est aussi vaste que souhaitée, et non dans le confinement de l'espace entre les feuilles de verre après que la solution ait rempli cet espace. L'élimination peut donc s'effectuer de manière relativement commode et d'autant plus rapide que la quantité d'eau qui doit être éliminée est peu importante.

Si l'élimination est entreprise, il va de soi qu'elle ne peut avantageusement être que d'ampleur limitée dans la mesure où, initialement on s'efforce de traiter des solutions dont la teneur en eau est aussi faible que les produits disponibles le permettent d'une part, et d'autre part que la teneur restante doit être suffisante pour prévenir une gélification précoce.

Dans ces conditions si l'on procède à une élimination partielle de l'eau de la composition, cette élimination représente généralement au plus 10% en poids de la composition initiale et de préférence pas plus de 5%.

Le séchage de ces compositions dont la teneur en eau initiale est faible et l'élimination limitée, présente des particularités remarquables par rapport aux techniques de séchage traditionnellement mises en oeuvre.

En raison du fait que le séchage ne conduit qu'à l'élimination d'une faible proportion d'eau, la durée de celui-ci est relativement courte. Ainsi, si dans les techniques traditionnelles les cycles de séchage s'étendent par exemple sur 32 heures ou au moins 24 heures pour traiter des couches qui une fois séchées sont de l'ordre de 1 millimètre d'épaisseur, dans le cas des compositions selon l'invention le temps de séchage est ordinairement de moins d'une heure dans des conditions de température analogues, et peut être encore bien plus bref.

En fait dans les opérations de séchage le temps de traitement n'est pas uniforme tout au long de celui-ci. Plus le taux résiduel d'eau dans la composition est faible, plus l'élimination devient difficile, et plus l'opération est longue. On comprend que la teneur en eau des couches préparées selon l'invention étant très supérieure à celle des couches obtenues traditionnellement par séchage, la durée de séchage puisse être considérablement réduite.

Le fait de pouvoir réduire le temps de séchage de manière considérable, permet à l'inverse de produire des couches beaucoup plus épaisses sans que la durée de traitement devienne prohibitive. Dans les conditions traditionnelles l'épaisseur de la couche obtenue ne dépasse normalement pas 2mm pour maintenir le séchage dans des durées acceptables. Même comme celà, comme indiqué précédemment, les cycles de séchage sont extrêmement longs.

La limitation du séchage fait qu'il est possible selon l'invention de produire dans un temps acceptable des couches atteignant ou dépassant 10mm d'épaisseur.

L'utilisation de couches épaisses peut conduire à des produits sensiblement différents de ceux habituellement disponibles. Par exemple les qualités de tenue au feu qui conduisent dans les techniques traditionnelles à accroître le nombre de couches et simultanément des feuilles de verre qui les supportent, peuvent être remplacées par des couches plus épaisses et un nombre de feuille de verre moindre. Autrement dit, il est possible par ce biais de réduire l'épaisseur, le poids et le coût du vitrage pour une même qualité finale.

Pour constituer des couches épaisses il est néanmoins préférable selon l'invention de procéder à la superposition de couches d'épaisseur moindre, par exemple de 1 ou 2mm. Cette façon de procéder est d'autant plus avantageuse que le séchage en couche mince qui s'effectue en un temps très court rend particulièrement avantageuses les techniques dans lesquelles les opérations de séchage s'effectuent en continu.

Si traditionnellement le séchage est conduit par "lots", dans des enceintes closes et régulées en température hygrométrie et circulation de l'atmosphère, il est avantageux selon l'invention, compte tenu de la réduction du temps de l'opération, de procéder dans des installations fonctionnant en continu. Par exemple les compositions étalées sur un support progressent dans un four de type tunnel, la durée de séjour dans le four correspondant au temps de séchage.

Le support des compositions à sécher peut être constitué par une des feuilles destinées à constituer le vitrage. Dans ce cas, une fois le séchage réalisé, la feuille revêtue de la couche intumescente est associée à au moins une autre feuille dans des conditions d'assemblage traditionnelles, par exemple par passage à l'étuve ou calandrage.

Dans le cas de l'invention le support est avantageusement constitué par un tapis convoyeur qui transporte la couche tout au long du séchage. La couche est ensuite séparée de son support pour être introduite dans la structure constituant le vitrage. Dans la forme élémentaire, la feuille est introduite entre deux feuilles de verre, l'ensemble étant réuni au cours d'opérations habituelles dans ce domaine. Comme indiqué plus haut, l'assemblage peut aussi comprendre une pluralité de couches intumescentes superposées pour constituer une épaisseur globale plus importante.

La production des vitrages selon l'invention est représentée de façon schématique aux figures annexées dans lesquelles:
- la figure 1 est une vue schématique en perspective d'un vitrage anti-feu élémentaire selon l'invention
- la figure 2 est un diagramme du mode de production depuis la constitution des compositions jusqu'au vitrage final;
- la figure 3 illustre un avantage relatif à l'application de la composition intumescente sur un support;
- la figure 4 est un diagramme de la variante d'une partie du mode de production dans lequel le séchage est effectué en continu sur un tapis convoyeur.

L'élément de base des vitrages anti-feu transparents est constitué systématiquement d'une couche intumescente 3, prise entre deux feuilles de verre 1 et 2. Les feuilles de verre sont comme représentées monolithiques ou le cas échéant constituées d'un ensemble feuilleté incluant une feuille intercalaire par exemple de type polyvinylbutyral.

Sur la base de cet élément les vitrages anti-feu commercialisés sont développés notamment en associant dans un même ensemble plusieurs couches intumescentes et plusieurs feuilles de verre, identiques ou différentes selon l'usage envisagé. Dans la pratique, pour les vitrages constitués avec des couches intumescentes obtenues par séchage, la multiplication des couches a pour but notamment d'accroître les caractéristiques de résistance au feu, les multiples couches intumescentes additionnant leurs effets, ceci faute de pouvoir commodément préparer des couches suffisamment épaisses pour les raisons indiquées précédemment.

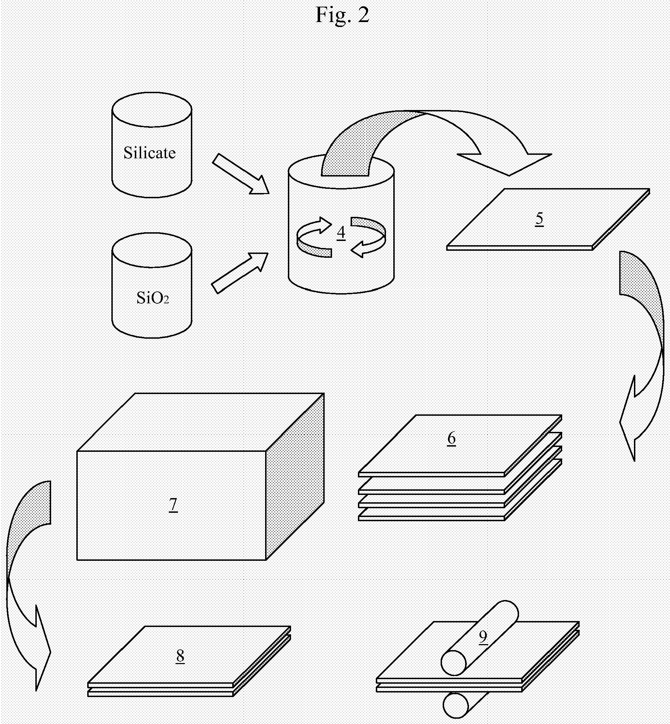

La figure 2 présente de façon schématique les différentes étapes de production d'un vitrage selon l'invention, certaines de ces étapes étant reprises de techniques traditionnelles comme il est indiqué ci-après. Les principales différences avec ces techniques antérieures résident dans la préparation de la composition et dans les conditions de séchage.

La préparation de la composition de silicate fait intervenir comme indiqué précédemment le mélange d'un silicate alcalin et de silice colloïdale ou, éventuellement, d'hydroxyde alcalin et de silice colloïdale. Le mélange est effectué pour parvenir aux compositions adéquates selon l'invention à savoir une teneur en eau (compte non tenu des additifs organiques éventuels) qui n'est pas inférieure à 45% en poids et au plus 55% en poids, avec un rapport molaire SiO₂/M₂O compris entre 3,5 et 7.

Le mélange est effectué sous agitation pour bien homogénéiser la composition comme représenté en 4. La composition est dégazée pour éliminer les bulles éventuellement présentes après ce mélange. La préparation qui peut être conservée dans une enceinte frigorifique plusieurs jours sans former un gel, est ensuite appliquée sur un support représenté en 5 par une feuille de verre.

La composition intumescente est stable à environ 4°C. En raison de sa teneur en eau relativement faible, une élévation significative de la température favorise sa gélification rapide. Cette propriété peut être avantageuse dans l'opération d'application de la composition sur le support utilisé au cours du séchage. Dans les techniques usuelles comportant un séchage, il est nécessaire de maintenir la solution liquide sur le support par un cordon disposé à la périphérie du support. On utilise habituellement un cordon d'un polymère de silicone ou un cordon minéral. Ce cordon est cependant générateur de coût et de possibles défauts de la zone de la couche qui est en contact avec ce cordon.

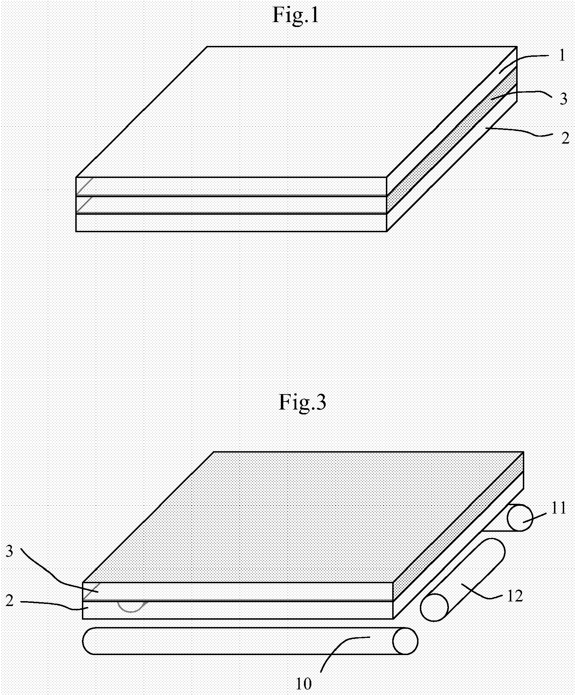

Il est possible selon l'invention de remplacer ce cordon par formation instantanée du gel le long des bords du support. Ce gel permet de maintenir la composition qui est encore fluide. Pour faire en sorte de créer ce cordon de gel, il est possible de préchauffer le périmètre destiné à confiner la composition liquide de sorte que celle-ci au contact du support chauffé localement se gélifie. Le chauffage du support 2 est représenté à la figure 3. Le chauffage est obtenu par exemple au moyen de résistances s'étendant sous le support 2 (dans le cas présenté une feuille de verre), résistance schématisées en 10, 11, 12....Le chauffage peut aussi être obtenu de manière radiante, et directement au-dessus de la composition 3 appliquée sur le support. Cette disposition représentée dans le cas d'éléments supports individualisés est aussi applicable au cas du support constitué d'un tapis convoyeur continu.

L'utilisation du gel de la composition pour maintenir celle-ci sur l'ensemble du support est d'autant plus avantageuse qu'elle évite toute contamination possible de la couche intumescente par des produits qui lui sont étrangers. La zone constituant ce gel ne présente pas exactement les mêmes caractéristiques que le reste de la couche à la fin du processus. Elle est donc éliminée au cours de l'émargeage de toute façon nécessaire pour la finition du produit.

Les feuilles de verres 6 revêtues de la composition sous une épaisseur de quelques millimètres au plus dans les conditions traditionnelles et qui peut être bien supérieure dans le cas de l'invention, sont ensuite transférées dans une enceinte de séchage 7. Là elles sont soumises à une atmosphère ventilée chaude et à hygrométrie et atmosphère contrôlées, suivant un cycle précis. Dans le cas des compositions selon l'invention cette étape de séchage est relativement brève. Pour cette raison ce séchage est avantageusement conduit de façon continue (non représentée à la figure 2) les feuilles 5 revêtues étant passées dans un four de type tunnel.

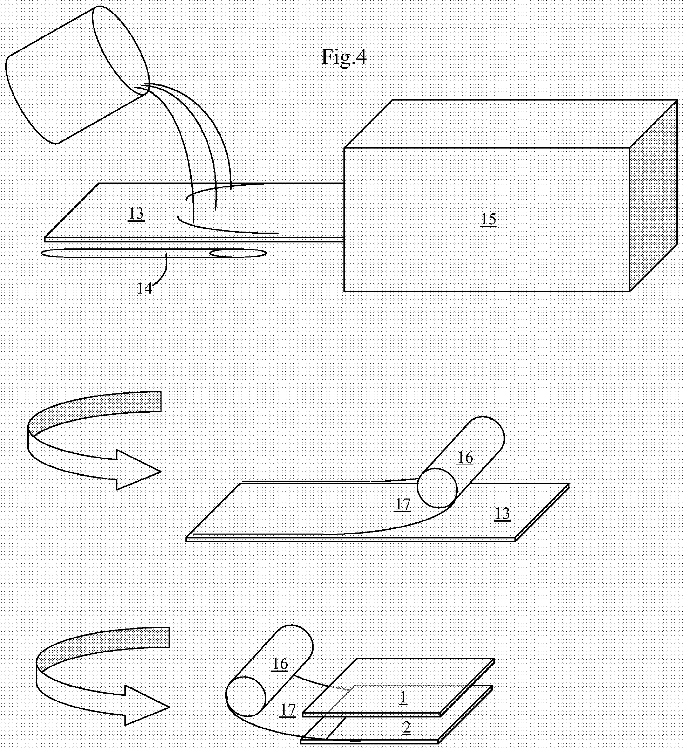

Comme indiqué précédemment l'application de la composition et son séchage peuvent aussi être effectués sur un support continu, la couche étant alors récupérée sous forme d'un ruban. Cette variante est illustrée à la figure 4. La solution de silicate préparée comme précédemment est versée sur le convoyeur 13, de façon préférée constitué d'un matériau polymère non adhérant à la feuille de silicate préparée. Le chauffage préalable des bords du tapis par des résistances 14 s'étendant le long de ses bords permet de figer la solution formant ainsi un "cordon qui retient la solution fluide sur le tapis. Le tapis ainsi revêtu passe ensuite dans le four de séchage 15. A la sortie du four de séchage, la feuille de silicate séchée 17 est séparée du tapis convoyeur 13, et éventuellement enroulée sur elle même comme représenté en 16. Pour éviter que les spires n'adhèrent les unes aux autres. La feuille peut être "interfoliée avec une feuille intercalaire pendant le stockage. La feuille de silicate ainsi préparée peut ensuite être assemblée avec des feuilles de verre 1 et 2.

Après séchage les opérations de finition des vitrages sont conduites de façon traditionnelle. Les feuilles de verre revêtues de la couche intumescente sont assemblées avec d'autres feuilles de verre éventuellement comportant aussi une couche intumescente suivant un ensemble plus ou moins complexe, ou comme dans le cas de la feuille de silicate sans support de feuille de verre au cours du séchage, elle est disposée entre deux feuilles de verre 1 et 2.

Dans les deux cas présentés précédemment la finition est analogue. Les ensembles constitués comme en 8 sont ensuite définitivement solidarisés au cours d'une opération qui peut être un calandrage à chaud comme représenté en 9. ou par passage à l'autoclave toujours suivant les techniques traditionnelles dans ce domaine.

Les exemples suivants sont donnés à titre indicatif de modes de préparation des couches intumescentes selon l'invention.

### Exemple 1

On mélange 101,6 parts d'un silicate de potassium commercial composé, en poids, de 26,8% de SiO2, de 14,5% de K2O, de 0,3% de Na2O et d'eau avec 20 parts de pastilles de KOH à 85,6%.

On prélève 100 parts de la solution formée dont 6,83 parts sont éliminés par évaporation pour obtenir un silicate de rapport molaire « Silice / Oxydes alcalins » 1,44, composé de 50% en poids d'oxydes métalliques et d'eau.

On mélange ensuite 90,6 parts du silicate de rapport molaire 1,44 avec 100 parts d'une dispersion à 50% de silice colloïdale (Ludox® TM-50) et avec 14,6 parts de glycérine à 99,5% pour obtenir, après une courte période de stabilisation, un sol transparent de rapport molaire « Silice / Oxydes alcalins » 4,6 et contenant 46,2% d'eau et 7% de glycérine.

Ce sol reste fluide suffisamment longtemps pour pouvoir être dégazé sous vide sans évaporation significative et pour pouvoir être versé sur une feuille de verre bordée par une barrière de telle façon que l'épaisseur de la couche de silicate soit de 2mm. L'échantillon est placé dans une étuve ventilée sous atmosphère contrôlée et est séché à 60°C. L'échantillon est retiré après 120 minutes. Sa concentration en eau a été ramenée à 38%. La couche est claire et transparente et adhère au support vitreux. Une feuille de verre est appliquée sur la couche par la technique du calandrage. Un ruban de protection est collé à la périphérie du vitrage feuilleté du verre obtenu. Après un an, l'échantillon, qui est toujours transparent, est coupé en deux. Une moitié est placée dans une étuve à 200°C et l'autre moitié est placée devant un four électrique porté à 600°C. Dans les deux cas, une mousse isolante adhérente aux feuilles de verre s'est formée.

### Exemple 2

On mélange 100 parts d'une dispersion à 50% de silice colloïdale (Ludox® TM-50) avec 38,7 parts d'une solution de KOH à 50% et avec 10,4 parts de glycérine à 99,5% pour former après une courte période de stabilisation un silicate transparent de rapport molaire 4,6 et contenant 48,2% en poids d'oxydes métalliques et 7% de glycérine.

Ce sol reste fluide suffisamment longtemps pour pouvoir être dégazé sous vide sans évaporation significative et pour pouvoir être versé sur une feuille de verre bordé par une barrière de telle façon que l'épaisseur de la couche de silicate soit de 4mm.

L'échantillon est placé dans une étuve ventilée sous atmosphère contrôlée, et est séché à 80°C. L'échantillon est retiré après 185 minutes. Sa concentration en eau a été ramenée à 35%. La couche est claire et transparente et adhère au support vitreux. Une feuille de verre est appliquée sur la couche par la technique du calandrage. Un ruban de protection est collé sur le périmètre du verre. L'échantillon est coupé en trois. Un tiers est placé dans une étuve à 80°C pendant 1 mois et reste clair et transparent. Un tiers est placé dans une étuve à 200°C, et le dernier tiers est placé devant un four électrique porté à 600°C. Dans ces deux derniers cas, une mousse isolante adhérente aux feuilles de verre s'est formée.

### Exemple 3

On mélange 100 parts d'une dispersion à 50% de silice colloïdale (Ludox® TM-50) avec 122,6 parts d'une solution de KOH à 50% pour former un silicate transparent de rapport molaire 1,5 et contenant 45,8% d'oxydes métalliques.

On prélève 100 parts de la solution formée et on élimine 23,6 parts par évaporation pour obtenir un silicate de rapport molaire « Silice / Oxydes alcalins » 1,5 composé de 60% d'oxydes métalliques et d'eau.

On mélange ensuite 69,1 parts du silicate de rapport molaire 1,5 avec 100 parts d'une dispersion à 50% de silice colloïdale (Ludox® TM-50) pour obtenir, après une courte période de stabilisation, un sol transparent de rapport molaire « Silice / Oxydes alcalins » 5 et contenant 45,6% d'eau.

On prélève 100 parts du sol qu'on dégaze sous vide sans évaporation significative. On verse sur une feuille de verre une épaisseur de 1mm de ce sol. L'échantillon est placé dans une étuve ventilée sous atmosphère contrôlée et est séché à 80°C. L'échantillon est retiré après 16 minutes. Sa concentration en eau a été ramenée à 41%. La couche est claire et transparente. Une feuille de verre est appliquée sur la couche par la technique du calandrage et de l'autoclavage. Un ruban de protection est collé sur le périmètre du vitrage feuilleté. L'échantillon est coupé en trois. Un tiers est placé dans une étuve à 80°C pendant 1 mois et reste clair et transparent. Un tiers est placé dans une étuve à 200°C et le dernier tiers est placé devant un four électrique porté à 600°C. Dans ces deux derniers cas, une mousse isolante adhérente aux feuilles de verre s'est formée.

### Exemple 4

On conserve 50g du sol de l'exemple 3 dans un flacon étanche dans une enceinte frigorifique à 4°C. Après 18 heures, le sol qui est toujours transparent et fluide, est coulé sur un verre trempé porté à 80°C . Le sol se fige instantanément au contact du verre.

### Exemple 5

On conserve 50g du sol de l'exemple 3 dans un flacon étanche à 4°C. Après 42 heures, le flacon est réchauffé à 30°C. Le sol est coulé à raison de 4mm d'épaisseur sur une feuille de verre en position horizontale dont les 4 bords ont été préchauffés à 60°C. Le sol se fige en atteignant les bords et maintient le reste de la solution sur la feuille.

## Revendications

1. Procédé de préparation de vitrage anti-feu transparent comprenant au moins une couche intumescente de silicate alcalin hydraté entre deux feuilles de verre, la couche intumescente de silicate alcalin présentant un rapport molaire Si02/M20 compris entre 3,5 et 7, et une teneur en eau de 33 à 43% en poids, cette couche étant obtenue par séchage à partir d'une composition aqueuse dont la teneur en eau avant séchage n'est pas supérieure à 55% et le rapport molaire est obtenu par l'addition d'une suspension concentrée de silice colloïdale.

2. Procédé selon la revendication 1 dans lequel le rapport molaire de la couche intumescente est de 4 à 6.

3. Procédé selon l'une des revendications précédentes dans lequel la teneur en eau de la couche intumescente est de 35 à 42% en poids.

4. Procédé selon l'une des revendications précédentes dans lequel la composition aqueuse servant à la préparation de la couche intumescente présente avant séchage une teneur en eau qui n'est pas inférieure à 45%.

5. Procédé selon l'une des revendications précédentes dans lequel la teneur en eau de la composition avant séchage n'est pas supérieure à 50%.

6. Procédé selon l'une des revendications précédentes dans lequel la composition aqueuse servant à la préparation de la couche intumescente est obtenue par addition d'une suspension aqueuse de silice colloïdale à une solution de silicate alcalin hydraté.

7. Procédé selon la revendication 6 dans lequel la solution de silicate alcalin présente une teneur en eau inférieure à 45 %.

8. Procédé selon l'une des revendications 6 ou 7 dans lequel la suspension de silice colloïdale présente une teneur pondérale en silice qui n'est pas inférieure à 45%.

9. Procédé selon l'une des revendications 6 à 8 dans lequel la solution de silicate alcalin hydraté est obtenue au moins en partie par réaction d'hydroxyde alcalin avec une suspension de silice.

10. Procédé selon la revendication 9 dans lequel l'hydroxyde alcalin réagissant avec la suspension de silice est en solution.

11. Procédé selon l'une des revendications précédentes dans lequel la composition est appliquée sur une feuille support en couche uniforme et séchée jusqu'à obtention de la concentration en eau requise.

12. Procédé selon la revendication 11 dans lequel la composition est appliquée en couche dont l'épaisseur ne dépasse pas 3mm.

13. Procédé selon l'une des revendications 11 ou 12 dans lequel la feuille support est une feuille de verre entrant dans la composition du vitrage, au moins une deuxième feuille de verre étant assemblée avec cette première feuille revêtue de la couche intumescente séchée.

14. Procédé selon l'une des revendications 11 à 13 dans lequel la couche intumescente est formée par superposition de plusieurs couches préalablement séchées.

15. Vitrage obtenu par le procédé selon l'une quelconque des revendications précédentes.

## Patentansprüche

1. Verfahren zur Herstellung einer transparenten Brandschutzverglasung, die mindestens eine intumeszierende Schicht aus hydratisiertem Alkalimetallsilikat zwischen zwei Glasplatten umfasst, wobei die intumeszierende Alkalimetallsilikat-Schicht ein Molverhältnis SiO₂/M₂O zwischen 3,5 und 7 und einen Wassergehalt von 33 bis 43 Gew.-% aufweist, wobei diese Schicht durch Trocknen ausgehend von einer wässrigen Zusammensetzung erhalten wird, deren Wassergehalt vor dem Trocknen nicht höher als 55% ist und wobei das Molverhältnis durch Zugabe einer konzentrierten Suspension von kolloidalem Siliziumdioxid erhalten wird.

2. Verfahren nach Anspruch 1, wobei das Molverhältnis der intumeszierenden Schicht von 4 bis 6 beträgt.

3. Verfahren nach einem der vorhergehenden Ansprüche, wobei der Wassergehalt der intumeszierenden Schicht 35 bis 42 Gew.-% beträgt.

4. Verfahren nach einem der vorhergehenden Ansprüche, wobei die wässrige Zusammensetzung, die zur Herstellung der intumeszierenden Schicht dient, vor dem Trocknen einen Wassergehalt von nicht weniger als 45% aufweist.

5. Verfahren nach einem der vorhergehenden Ansprüche, wobei der Wassergehalt der Zusammensetzung vor dem Trocknen nicht höher als 50% ist.

6. Verfahren nach einem der vorhergehenden Ansprüche, wobei die wässrige Zusammensetzung, die zur Herstellung der intumeszierenden Schicht dient, durch Zugabe einer wässrigen Suspension von kolloidalem Siliziumdioxid zu einer Lösung von hydratisiertem Alkalimetallsilikat erhalten wird.

7. Verfahren nach Anspruch 6, wobei die Alkalimetallsilikat-Lösung einen Wassergehalt von weniger als 45% aufweist.

8. Verfahren nach einem der Ansprüche 6 oder 7, wobei die Suspension von kolloidalem Siliziumdioxid einen Gehalt an Siliziumdioxid, bezogen auf Gewicht, von nicht weniger als 45% aufweist.

9. Verfahren nach einem der Ansprüche 6 bis 8, wobei die Lösung von hydratisiertem Alkalimetallsilikat zumindest zum Teil durch Umsetzung von Alkalimetallhydroxid mit einer Siliziumdioxid-Suspension erhalten wird.

10. Verfahren nach Anspruch 9, wobei das Alkalimetallhydroxid, das mit der Siliziumdioxid-Suspension reagiert, in Lösung vorliegt.

11. Verfahren nach einem der vorhergehenden Ansprüche, wobei die Zusammensetzung auf eine Trägerplatte in gleichmäßiger Schicht aufgetragen und getrocknet wird, bis die erforderliche Wasserkonzentration erhalten wird.

12. Verfahren nach Anspruch 11, wobei die Zusammensetzung in einer Schicht aufgetragen wird, deren Dicke 3 mm nicht übersteigt.

13. Verfahren nach einem der Ansprüche 11 oder 12, wobei es sich bei der Trägerplatte um eine Glasplatte handelt, die in die Verglasungszusammensetzung eingebracht wird, wobei mindestens eine zweite Glasplatte mit der ersten Platte, die mit der getrockneten intumeszierenden Schicht beschichtet ist, zusammengefügt wird.

14. Verfahren nach einem der Ansprüche 11 bis 13, wobei die intumeszierende Schicht durch Übereinanderlagerung mehrerer zuvor getrockneter Schichten hergestellt wird.

15. Verglasung, die durch das Verfahren nach einem der vorhergehenden Ansprüche erhalten wird.

## Claims

1. Process for the preparation of a transparent fire-resistant glazing comprising at least one intumescent layer of hydrated alkali metal silicate between two glass sheets, the intumescent layer of alkali metal silicate exhibiting an SiO₂/M₂O molar ratio of between 3.5 and 7 and a water content of 33% to 43% by weight, this layer being obtained by drying starting from an aqueous composition, the water content of which before drying is not greater than 55% and the molar ratio of which is obtained by the addition of a concentrated suspension of colloidal silica.

2. Process according to Claim 1, in which the molar ratio of the intumescent layer is from 4 to 6.

3. Process according to either of the preceding claims, in which the water content of the intumescent layer is from 35% to 42% by weight.

4. Process according to one of the preceding claims, in which the aqueous composition used for the preparation of intumescent layer exhibits, before drying, a water content which is not less than 45%.

5. Process according to one of the preceding claims, in which the water content of the composition before drying is not greater than 50%.

6. Process according to one of the preceding claims, in which the aqueous composition used for the preparation of the intumescent layer is obtained by addition of an aqueous suspension of colloidal silica to a solution of hydrated alkali metal silicate.

7. Process according to Claim 6, in which the solution of alkali metal silicate exhibits a water content of less than 45%.

8. Process according to either of Claims 6 and 7, in which the suspension of colloidal silica exhibits a content by weight of silica which is not less than 45%.

9. Process according to one of Claims 6 to 8, in which the solution of hydrated alkali metal silicate is obtained at least in part by the reaction of alkali metal hydroxide with a silica suspension.

10. Process according to Claim 9, in which the alkali metal hydroxide which reacts with the silica suspension is in solution.

11. Process according to one of the preceding claims, in which the composition is applied to a support sheet as a uniform layer and dried until the required water concentration is obtained.

12. Process according to Claim 11, in which the composition is applied as a layer, the thickness of which does not exceed 3 mm.

13. Process according to either of Claims 11 and 12, in which the support sheet is a glass sheet forming part of a composition of the glazing, at least one second glass sheet being assembled with this first sheet coated with the dried intumescent layer.

14. Process according to one of Claims 11 to 13, in which the intumescent layer is formed by superimposition of several layers applied beforehand.

15. Glazing obtained by the process according to any one of the preceding claims.
